# EUROPEAN PATENT SPECIFICATION

(11) **EP 0 489 537 B1**
(45) Date of publication and mention of the grant of the patent: **10.08.1994**
(21) Application number: 91310971.6
(22) Date of filing: 28.11.1991
(51) Int. Cl.: B60J 10/00, B60J 10/04, B60S 1/04, E06B 7/215

(54) **Sealing arrangements**
Dichtungsvorrichtung
Dispositif d'etanchéité

(30) Priority: 05.12.1990 GB 9026438; 12.12.1990 GB 9026961; 18.12.1990 GB 9027383; 16.02.1991 GB 9103334
(43) Date of publication of application: 10.06.1992
(73) Proprietor: DRAFTEX INDUSTRIES LIMITED, Edinburgh, EH3 6YY, Scotland (GB)
(72) Inventor: Maass, Klaus Peter, W-4060 Viersen 12 (DE); Frommen, Peter, W-4060 Viersen 1 (DE)
(74) Representative: Foster, David Martyn

(56) References cited:
- EP-A- 0 334 307
- FR-A- 2 633 660
- FR-A- 2 636 027
- US-A- 2 530 160
- US-A- 3 452 384
- US-A- 4 105 248

## Description

The invention relates to a sealing and wiping arrangement for sealing and wiping against a slidable window glass, comprising a flexible element mounted adjacent to the window glass, and control means for moving the element between first and second positions in which it is respectively in and out of sealing contact with the window glass and for controlling the force with which the flexible element contacts the window glass.

Such an arrangement is known from US-A-3 452 384. This known arrangement is for wiping the upwardly and downwardly slidable tailgate window glass of a vehicle body. A flexible wiping element extends longitudinally of the tailgate window glass and is mounted adjacent to it so as to be pivotable about an axis parallel to the glass surface. A roller in contact with the window glass pivots the wiping element away from the window glass as it is lowered. When the window glass is raised, the same roller pivots the wiper blade into contact with the window glass. This movement of the wiper blade into contact with the window glass is transmitted through a slip clutch arrangement which is arranged to slip when the wiper blade has contacted the window glass so as to prevent over-pressure between the blade and the glass. The slip clutch can be adjusted to provide the optimum wiping pressure. With this arrangement, therefore, the wiper blade is either completely out of contact with the window glass or is contacting the window glass with a fixed and predetermined pressure. Such an arrangement does therefore not permit the wiper blade to be selectively in contact with the window glass with respectively different and predetermined pressures. The invention aims to overcome this problem.

Accordingly, the known arrangement is characterised in that the control means includes means selectively operable to move the flexible element into a third position in which it contacts the glass with a greater force than in the second position, whereby to wipe the glass as the latter slides.

In this way, therefore, the flexible element can act simply as a sealing element or it can be forced into greater contact with the window glass so as to act as a wiping element.

Sealing and wiping arrangements embodying the invention and for sealing against slidable window glass in a motor vehicle body will now be described, by way of example only, with reference to the accompanying diagrammatic drawings in which:
Figure 1 is a cross-section through an arrangement, in a sealing configuration;
Figure 2 corresponds to Figure 1 but shows the arrangement of Figure 1 in a non-sealing configuration; and
Figure 3 corresponds to Figure 1 but shows the arrangement in a wiping configuration.

The arrangements to be described are for sealing against the window pane (10) which can be raised and lowered, such as a window pane in a vehicle body which can be lowered into and raised from the lower part of the door.

The Figures show a cross-section through part of the door to an enlarged scale. The lower part of the door is hollow and is the space between an inner body panel 12 and an outer body panel 14. The window pane 10 can be lowered into the interior 16 of the lower part of the door by means of the normal window winding mechanism which may be manually operated or motorised. The inner and outer body panels 12 and 14 define the gap at the so-called waistline through which the window pane 10 is raised and lowered. It is necessary to provide a flexible sealing arrangement for sealing against the opposite faces of the window pane 10, particularly when the window pane 10 is in its closed (fully raised) position. For this purpose, seals are mounted on the body panels 12 and 14 and run along the length of the gap 18. The seal on the body panel 12 is omitted, but a form of the seal 20 on the body panel 14 will now be described. The seal 20 is made of flexible material such as plastics or rubber material and is preferably manufactured by an extrusion process.

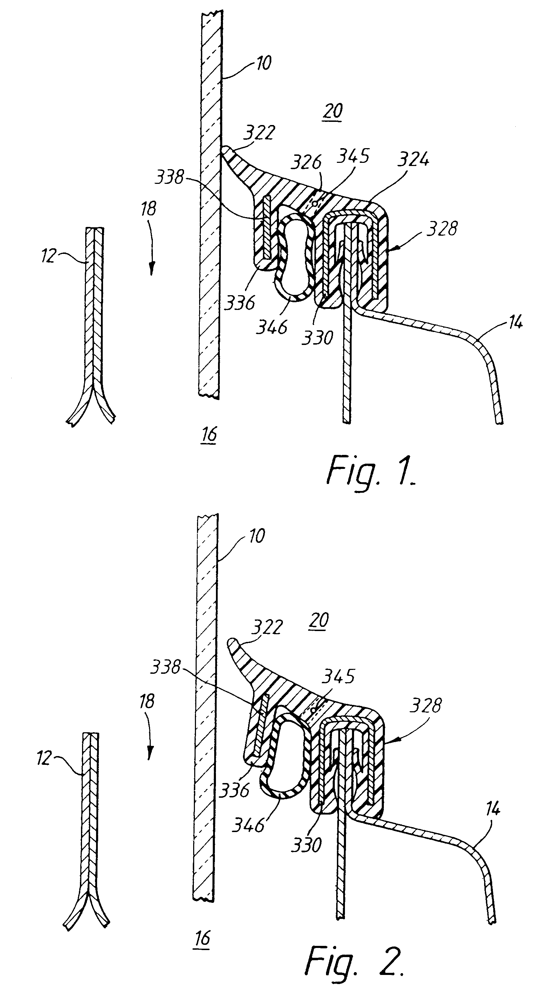

Referring to Figure 1, the seal 20 mounted on the body panel 14 is in the form of a lip 322 which is made of flexible plastics or rubber material and is integral with a body part 324 which may be made of more rigid material. However, the body part 324 incorporates an integral flexible region 326 which acts as a hinge (in a manner to be explained) and integrally connects the body part 324 with a mounting part 328 in the form of a channel which is reinforced with a metal channel-shaped carrier 330 of any suitable form. Part 328 is mounted on the body panel 14 by frictionally embracing it, lips within the part 328 helping this frictional grip. Other fixing means may, however, be used instead.

The seal 20 also incorporates an integral depending leg 336 which includes a reinforcing metal strip 338. The reinforcing metal strip 338 may be a continuous unapertured strip of metal or may be apertured with a series of slits or slots to aid flexibility if this is required. Instead, however, the metal strip may be replaced by strips of other hard material such as hardened rubber or plastics. A further possibility is to make the leg 336 of hardened rubber or plastics. Different parts of the seal can be extruded integrally to have different hardnesses.

As shown in Figure 1, a hollow tube 346, which runs for the length of the waistline and is air-tight, is held in position between the facing surfaces of part 328 and the depending leg 336. The interior of the air tube 346 is connected to a source of air pressure by means of which its shape can be controlled. When the tube has the shape shown in Figure 1, lip 322 is in sealing contact with the window pane. In this configuration, the window pane is in its fully closed position.

When it is desired to lower the window pane, either manually or automatically, the tube 346 is inflated by air pressure into the configuration shown in Figure 2. In this configuration, the expanded air tube applies a force to the side of the leg 336, causing the body 334 of the seal 20 to hinge against the resilience of the material about the pivot axis 345. The sealing lip 322 is thus moved out of sealing configuration with the window glass. Deflation of the air tube 346 collapses it and the resilience of the material of the seal causes the lip 322 to move back into sealing engagement with the window pane 10 as shown in Figure 1.

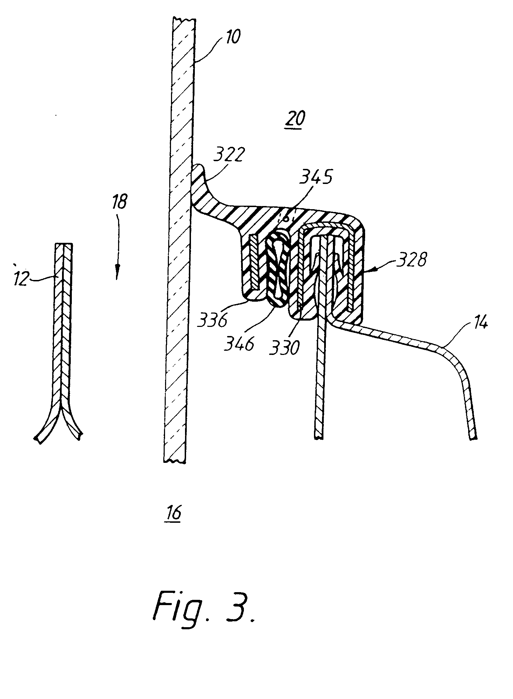

Figure 3 shows the configuration which is assumed when the air-tube 346 is collapsed to a greater degree than shown in Figure 1. In this configuration, the lip 322 is forced into closer contact with the window pane than in Figure 1 and is able to carry out a wiping or cleaning action on the window pane by causing the window pane to be moved downwards (or possibly upwards) with the lip held in this position. Means may be provided for applying a jet of cleaning fluid to the window pane to aid this process. Movement of the lip 322 into the position shown in Figure 3, and operation of the cleaning fluid jet if provided, can be controlled manually or possibly automatically in associated with the window operation.

Instead of an air pressure source, a source of partial vacuum may be used to control the shape of the air-tube 346 against its natural resilience.

## Claims

1. A sealing and wiping arrangement for sealing against a slidable window glass (10), comprising a flexible element (322) mounted adjacent to the window glass (10), and control means (346,345) for moving the element (322) between first and second positions in which it is respectively in and out of sealing contact with the window glass (10) and for controlling the force with which the flexible element (322) contacts the window glass (10), characterised in that the control means (346,345) includes means selectively operable to move the flexible element (322) into a third position (Figure 3) in which it contacts the glass (10) with a greater force than in the second position, whereby to wipe the glass (10) as the latter slides.

2. An arrangement according to claim 1, characterised in that the flexible element (10) is resiliently biassed into the third position and is moved therefrom by the control means (346,345) against the resilient bias and into the said second and the said first positions.

3. An arrangement according to claim 1 or 2, characterised in that the control means (346) comprises a flexible fluid pressure chamber (346) positioned adjacent to the flexible element (322) and adapted to undergo a change in its shape in response to change of the fluid pressure therein, whereby to move the element (322) between the said positions and to control the said force.

4. An arrangement according to claim 3, characterised in that the flexible element (322) is connected to a reinforced member (336) which defines one wall of a channel, and in that the flexible fluid pressure chamber (346) is positioned within this channel so as to exert pressure against the reinforced member which in turn applies the said force to the flexible element (322).

5. An arrangement according to claim 4, characterised in that the reinforced member (336) and the flexible element (322) are both made of extruded plastics or rubber material, and the reinforced member (336) is reinforced with embedded metal.

6. An arrangement according to any preceding claim, characterised by cleaning fluid applying means operative when activated to apply cleaning fluid to the panel.

## Patentansprüche

1. Dichtungs- und Reinigungsvorrichtung zum Abdichten gegenüber einer verschiebbaren Fensterscheibe (10) mit einem angrenzend an die Fensterscheibe (10) angeordneten flexiblen Element (322) und einem Steuerelement (346, 345), um das Element (322) zwischen ersten und zweiten Stellungen zu bewegen, in welchen das Element (322) in dieser Reihenfolge in Dichtkontakt und außer Dichtkontakt mit der Fensterscheibe (10) steht, sowie um die Kraft zu regeln, mit der das flexible Element (322) die Fensterscheibe (10) berührt,
**dadurch gekennzeichnet**,
daß das Steuerelement (346, 345) ein separat betreibbares Bauteil umfaßt, um das flexible Element (322) in eine dritte Stellung (Fig.3) zu bewegen, in der es die Fensterscheibe (10) mit größerer Kraft berührt, als in der zweiten Stellung, wodurch die Fensterscheibe (10) während des Verschiebens gereinigt wird.

2. Vorrichtung nach Anspruch 1, dadurch gekennzeichnet, daß das flexible Element (322) in Richtung der dritten Stellung elastisch vorgespannt ist und mittels des Steuerelements (346, 345) von dort entgegen der flexiblen Vorspannung in die zweite und die erste Stellung bewegt wird.

3. Vorrichtung nach Anspruch 1 oder Anspruch 2, dadurch gekennzeichnet, daß das Steuerelement (346) eine flexible Fluiddruckkammer (346) umfaßt, die angrenzend an das flexible Element (322) angeordnet und so ausgelegt ist, daß sie sich als Reaktion auf die Änderung des sich in ihr befindlichen Fluiddrucks einer Formanderung unterzieht, um das Element (322) zwischen den Stellungen zu bewegen und die Andruckkraft zu regeln.

4. Vorrichtung nach Anspruch 3, dadurch gekennzeichnet, daß das flexible Element (322) mit einem verstärkten Bauteil (336) verbunden ist, das eine Seitenwand eines Kanals bildet sowie dadurch, daß die flexible Fluiddruckkammer (346) im Inneren dieses Kanals angeordnet ist, um Druck gegen das verstärkte Bauteil auszuüben, welches diese Kraft dann wiederum auf das flexible Element (322) aufbringt.

5. Vorrichtung nach Anspruch 4, dadurch gekennzeichnet, daß beide, das verstärkte Bauteil (336) und das flexible Element (322), aus extrudiertem Kunststoff- oder Gummi-Material bestehen und das verstärkte Bauteil (336) mittels eingebetteten Metall verstärkt ist.

6. Vorrichtung nach einem der Ansprüche 1 bis 5, gekennzeichnet durch ein eine Reinigungsflüssigkeit aufbringendes Bauteil, welches, sobald es aktiviert wird, Reinigungsflüssigkeit auf die Scheibe aufbringt.

## Revendications

1. Dispositif d'étanchéité et d'essuyage servant à former un joint étanche contre une vitre (10) de fenêtre coulissante et à essuyer cette vitre, comprenant un élément flexible (322) monté adjacent à la vitre (10) de la fenêtre, et des moyens de commande (346, 345) servant à déplacer l'élément (322) entre des première et deuxième positions, dans lesquelles il est respectivement en contact et hors de contact de joint étanche avec la vitre (10) de la fenêtre, et à régler la force avec laquelle l'élément flexible (322) est en contact avec la vitre (10) de la fenêtre, caractérisé en ce que les moyens de commande (346, 345) comprennent des moyens pouvant être sélectivement mis en action pour placer l'élément flexible (322) dans une troisième position (figure 3) dans laquelle il est en contact avec la vitre (10) avec une plus grande force que dans la deuxième position, pour racler ainsi la vitre (10) lorsque cette dernière coulisse.

2. Dispositif selon la revendication 1, caractérisé en ce que l'élément flexible (10) est sollicité élastiquement pour prendre sa troisième position et il est écarté de cette position par les moyens de commande (346, 345) à l'encontre de la sollicitation élastique, et placé dans lesdites deuxième et première positions.

3. Dispositif selon la revendication 1 ou 2, caractérisé en ce que le moyen de commande (346) comprend une chambre flexible (346) à pression de fluide, positionnée adjacente à l'élément flexible (322) et adaptée pour subir une variation de sa forme en reponse à une variation de la pression de fluide qui y règne, pour déplacer ainsi l'élément (322) entre lesdites positions et pour commander ladite force.

4. Dispositif selon la revendication 3, caractérisé en ce que l'élément flexible (322) est relié à un élément renforcé (336) qui définit une paroi d'une gouttière et en ce que la chambre flexible (346) à pression de fluide est positionnée dans cette gouttière de manière à exercer une pression contre l'élément renforcé qui, à son tour, applique ladite force à l'élément flexible (322).

5. Dispositif selon la revendication 4, caractérisé en ce que l'élément renforcé (336) et l'élément flexible (322) sont tous deux faits de matière plastique ou de matière caoutchouteuse extrudée, et l'élément renforcé (336) est renforcé par du métal noyé.

6. Dispositif selon une quelconque des revendications précédentes, caractérisé par des moyens d'application d'un fluide de nettoyage qui agissent lorsqu'ils sont activés pour projeter un fluide de nettoyage sur le panneau.
